# FASCICULE DE BREVET EUROPEEN

(11) **EP 2 801 220 B1**
(45) Date de publication et mention de la délivrance du brevet: **02.05.2018**
(21) Numéro de dépôt: 12819101.2
(22) Date de dépôt: 20.12.2012
(51) Int. Cl.: H04W 8/20, H04W 4/00, H04W 8/24, H04W 12/06, H04W 88/06

(54) **PROCEDE D'ACTIVATION SUR UN DEUXIEME RESEAU D'UN TERMINAL COMPRENANT UN MODULE MEMOIRE ASSOCIE A UN PREMIER RESEAU**
VERFAHREN ZUR AKTIVIERUNG AUF EINEM ZWEITEN NETZWERK EINES ENDGERÀTS, DAS EIN MIT EINEM ERSTEN NETZWERK ZUGEORDNETES SPEICHERMODUL BEINHALTET.
METHOD FOR ACTIVATING ON A SECOND NETWORK A TERMINAL COMPRISING A MEMORY MODULE ASSOCIATED WITH A FIRST NETWORK

(30) Priorité: 05.01.2012 FR 1250127
(43) Date de publication de la demande: 12.11.2014
(73) Titulaire: Orange, 75015 Paris (FR)
(72) Inventeur: COUREAU, Laurent, F-91420 Morangis (FR); LUCAS, Philippe, F-91570 Bievres (FR); MORA, Eric, F-93260 Les Lilas (FR)
(74) Mandataire: Cabinet Plasseraud
(86) Numéro de dépôt international: PCT/FR2012/053020
(87) Numéro de publication internationale: WO 2013/102722

(56) Documents cités:
- WO-A1-2009/073305
- GB-A- 2 473 753

## Description

L'objet de la présente invention a trait au domaine de l'activation et de la gestion des modules mémoires embarqués sur des terminaux du type terminaux de télécommunications.

Dans le cadre de la présente invention, les modules mémoires sont associés à un réseau original, dit premier réseau. Un des objets de la présente invention est d'activer sur un deuxième réseau des terminaux sur lesquels sont embarqués de tels modules mémoires, ceci afin d'en assurer la gestion sur le deuxième réseau en tant qu'abonnés locaux.

Actuellement, lors de leur fabrication, certains terminaux comportent un module mémoire. De tels terminaux peuvent intégrer directement un tel module mémoire : dans ce cas, le module mémoire est par exemple fixé directement au terminal par soudage ; alternativement, le module mémoire peut être un module déplaçable et interchangeable. En tout état de cause, un tel module est destiné à contenir des informations spécifiques et personnelles de l'abonné sur le réseau.

Lorsque de tels modules mémoires ne permettent pas de charger un nouvel abonnement sur un autre réseau, l'ensemble des données relatives à l'authentification de l'abonné sur cet autre réseau doit être pré-chargé. Ce genre de pré-chargement est fastidieux, et comporte de nombreuses limitations telles que par exemple la nécessité de pré-charger des données sensibles (algorithmes de sécurité, certificats relatifs à l'abonné, etc.).

Par ailleurs, si de tels terminaux sont distribués dans plusieurs pays, il faut prévoir un nouveau type d'abonnement permettant d'avoir une gestion locale du terminal et de l'utilisation des services du réseau dans lequel le terminal est activé, ceci doit alors être réalisé pour chaque pays dans lequel les terminaux sont distribués.

Cependant, il n'existe pas à ce jour de solution simple permettant une telle activation et une telle gestion des terminaux. Les différentes solutions envisagées jusqu'à présent sont complexes et nécessitent des modifications conséquentes tant au niveau des modules mémoires et des terminaux qu'au niveau de l'architecture des réseaux.

Le document GB 2 473 753 divulgue un procédé d'activation sur un deuxième réseau d'un terminal stockant dans sa mémoire une donnée d'identification temporaire : un tel procédé permet ainsi de basculer un terminal de télécommunication d'un trafic en itinérance (ou « *roaming* ») à un trafic local.

L'objet de la présente invention se propose donc de résoudre notamment les différents problèmes techniques énoncés ci-dessus, les contraintes de fabrication actuelles étant prises en considération dans le cadre de la présente invention.

Permettre la conception d'un seul type de terminal comprenant un seul type de module mémoire à destination de plusieurs pays est un des objectifs de la présente invention.

L'objet de la présente invention se propose de permettre l'activation sur un deuxième réseau d'un terminal comprenant un module mémoire associé dans une base de données centrale à un premier réseau prédéterminé, le tout en modifiant a minima le module mémoire et l'architecture réseau existante.

A cet effet, l'objet de la présente invention porte sur un procédé, selon la revendication 1, d'activation sur un deuxième réseau d'un terminal comprenant un module mémoire comportant une donnée d'identification temporaire, le module mémoire étant associé dans une base de données centrale à un premier réseau prédéterminé.

Avantageusement, le procédé d'activation selon la présente invention comporte une première étape d'authentification du module mémoire auprès de la base de données centrale, ceci suite à une première connexion du terminal au premier réseau via une passerelle d'interconnexion. Cette passerelle d'interconnexion permet ici une interconnexion entre le premier et le deuxième

Cette première étape d'authentification est réalisée notamment par l'intermédiaire de la donnée d'identification temporaire. Cette donnée d'identification temporaire est enregistrée initialement dans le module mémoire, ce qui permet notamment la conception d'un seul type de module mémoire qui est apte à être reconnu par un même premier module d'authentification et ce quelque soit le réseau sur lequel le terminal est activé.

De façon avantageuse, on relève que cette authentification est réalisée auprès de la base de données centrale sur le premier réseau.

Le procédé d'activation selon la présente invention comporte ensuite une étape de détermination ; cette étape de détermination consiste à déterminer une nouvelle donnée d'identification suite à une activation du terminal dans le deuxième réseau.

Avantageusement, la détermination de cette nouvelle donnée d'identification, lors de l'étape de détermination, est réalisée parmi une pluralité de données d'identification prédéterminées dans la base de données centrale. La constitution d'une base de données centrale comprenant une pluralité de données préenregistrées permet notamment aux opérateurs d'ouvrir leurs offres d'abonnement.

Avantageusement, l'étape de détermination consiste notamment à traiter l'information relative au deuxième réseau dans lequel le terminal est activé. Cette information est transmise à la base de données centrale lors de la première connexion du terminal au premier réseau via la passerelle d'interconnexion. Dans une variante de réalisation avantageuse, cette donnée d'identification comprend une information relative à une zone géographique, un pays ou un opérateur local prédéterminé pour cette zone géographique ou ce pays.

Le procédé d'activation selon la présente invention comporte en outre une première étape de transmission qui consiste à transmettre cette nouvelle donnée d'identification au module mémoire pour une mémorisation sur le module mémoire de cette nouvelle donnée d'identification.

Grâce à cette succession d'étapes techniques, caractéristique de la présente invention, il est donc possible d'activer le module mémoire sur le deuxième réseau en se connectant une première fois au premier réseau par l'intermédiaire d'une passerelle d'interconnexion. Cette activation est réalisée notamment suite à l'authentification et la mise à jour de la donnée d'identification, cette authentification et cette mise à jour étant réalisées en fonction du deuxième réseau. Ainsi, lors d'une prochaine connexion du terminal sur le deuxième réseau, le module mémoire est reconnu comme étant activé sur le deuxième réseau. L'utilisateur du terminal peut alors accéder aux services du deuxième réseau en tant qu'abonné de ce réseau.

Il est possible avec la solution technique apportée par la présente invention de permettre la fabrication d'un seul type de terminal comportant un seul type de module mémoire. La solution mise en oeuvre par la présente invention permet ainsi la conception d'un module mémoire global et unique qui peut être activé et fonctionner dans tous les réseaux qui ont été initialement prédéterminés par l'opérateur, cette activation se faisant notamment par une première authentification au niveau d'un premier réseau ou réseau originel.

Ainsi, l'objet de la présente invention permet avantageusement de faire basculer aisément un terminal d'un trafic en itinérance (ou « roaming ») à un trafic local. La présente invention permet ainsi de mettre un terme au « permanent roaming » envisagé jusqu'à présent.

Grâce à cette solution, il n'est également pas nécessaire pour les opérateurs de partager des données sensibles, telles que par exemple des algorithmes de sécurité ou encore des certificats relatifs à l'abonné, pour passer d'un réseau à un autre.

Une fois le module mémoire activé sur le deuxième réseau, le terminal peut donc être utilisé comme un terminal d'abonné local dans le deuxième réseau. Il s'agit ici d'une deuxième phase dite phase nominale qui fait suite à l'activation précédemment décrite. A cet effet, le procédé d'activation selon la présente invention comporte une deuxième étape d'authentification du module mémoire auprès de la base de données centrale par l'intermédiaire de la donnée d'identification. Cette deuxième étape d'authentification est réalisée suite à une deuxième connexion du terminal au premier réseau via la passerelle d'interconnexion. La deuxième étape d'authentification permet la gestion des accès du terminal aux services du deuxième réseau.

Avantageusement, la deuxième étape d'authentification consiste notamment à comparer la donnée d'identification avec la base de données centrale.

De façon optionnelle, suite à cette deuxième étape d'authentification, le procédé d'activation selon la présente invention comporte une deuxième étape de transmission qui consiste à transmettre à la passerelle d'interconnexion le résultat de la deuxième étape d'authentification.

Le procédé d'activation selon la présente invention permet ainsi l'activation d'un module mémoire sur un deuxième réseau pour que le terminal qui lui est associé accède aux services de ce deuxième réseau en tant qu'abonné «local ». On relève alors de façon avantageuse une gestion en local du module mémoire sur le deuxième réseau, ceci alors même que l'activation et l'authentification restent sous la réalisation du premier réseau.

Corrélativement, l'objet de la présente invention concerne un programme d' ordinateur, selon la revendication 3, comportant des instructions adaptées pour l'exécution des étapes du procédé d'activation tel que décrit ci-dessus, notamment lorsque le programme d'ordinateur est exécuté par un ordinateur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

De même, l'objet de la présente invention porte sur un support d'enregistrement lisible par un ordinateur sur lequel est enregistré un programme d'ordinateur comprenant des instructions pour l'exécution des étapes du procédé d'activation tel que décrit ci-dessus.

D'une part, le support d'enregistrement peut être n'importe quel entité ou dispositif capable de stocker le programme. Par exemple, le support peut comporter un moyen de stockage, tel qu'une mémoire ROM, par exemple un CD-ROM ou une mémoire ROM de type circuit microélectronique, ou encore un moyen d'enregistrement magnétique, par exemple une disquette de type « floppy disc » ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon l'invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

L'objet selon la présente invention porte également sur une entité informatique, selon la revendication 4, pour l'activation d'un terminal sur un deuxième réseau, le terminal comprenant un module mémoire qui d'une part comporte une donnée d'identification temporaire et qui d'autre part est associé dans une base de données centrale à un premier réseau prédéterminé.

L'entité informatique selon la présente invention est adaptée pour mettre en oeuvre les différentes étapes techniques du procédé d'activation décrit précédemment.

Plus précisément, l'entité informatique selon la présente invention comporte un module d'authentification comprenant un premier moyen d'authentification configuré pour permettre l'authentification du module mémoire auprès de la base de données centrale. Cette authentification est réalisée notamment par l'intermédiaire de la donnée d'identification temporaire suite à une première connexion du terminal au premier réseau via une passerelle d'interconnexion.

Le module d'authentification comprend en outre un moyen de détermination configuré pour déterminer une nouvelle donnée d'identification suite à une activation du terminal dans le deuxième réseau. Dans une variante de réalisation avantageuse, cette donnée d'identification comprend une information relative à une zone géographique, un pays ou un opérateur local prédéterminé pour cette zone géographique ou ce pays.

Le module d'authentification comprend également un premier moyen de transmission configuré pour transmettre cette nouvelle donnée d'identification au module mémoire pour une mémorisation sur le module mémoire de cette nouvelle donnée d'identification.

Ainsi, grâce à ces différents éléments techniques constitutifs de l'entité informatique selon la présente invention, le module mémoire du terminal est reconnu comme activé sur le deuxième

Avantageusement, le moyen de détermination est configuré pour que la détermination de la nouvelle donnée d'identification soit réalisée parmi une pluralité de données d'identification prédéterminées dans la base de données centrale.

Avantageusement, le moyen de détermination est configuré pour traiter l'information relative au deuxième réseau dans lequel le terminal est activé ; cette information est transmise à la base de données centrale lors de la première connexion du terminal au premier réseau via la passerelle d'interconnexion.

Avantageusement, l'entité informatique selon la présente invention comporte un deuxième module d'authentification. Ce deuxième module d'authentification comprend notamment un deuxième moyen d'authentification configuré pour permettre l'authentification du module mémoire auprès de la base de données centrale ; cette authentification se fait par l'intermédiaire de la donnée d'identification suite à une deuxième connexion du terminal au premier réseau via la passerelle d'interconnexion.

Cette deuxième phase, dite phase nominale, permet après activation la gestion des accès du terminal aux services du deuxième réseau.

Avantageusement, le deuxième moyen d'authentification est configuré pour comparer la donnée d'identification avec la base de données centrale.

Avantageusement, le deuxième module d'authentification comporte un deuxième moyen de transmission configuré pour transmettre à la passerelle d'interconnexion le résultat de l'authentification.

Avantageusement, bien que fonctionnellement différent, il est possible dans une variante de réalisation de la présente invention que les premier et deuxième modules d'authentification soient confondus et correspondent à une seule et même entité physique.

Un des autres aspects de la présente invention porte également sur le terminal à proprement parler et le procédé de gestion qui est mis en oeuvre sur celui-ci ; cet autre aspect de la présente invention est le corollaire du procédé et de l'entité informatique ci-dessus décrits.

Plus précisément, un des autres aspects de la présente invention porte sur un procédé de gestion sur un deuxième réseau d'un terminal, selon la revendication 6, comprenant un module mémoire associé dans une base de données centrale à un premier réseau prédéterminé, et comportant une donnée d'identification temporaire.

Avantageusement, pour permettre la gestion du terminal sur le deuxième réseau, le procédé de gestion selon la présente invention comporte une première étape de connexion du terminal au premier réseau via une passerelle d'interconnexion pour établir, à l'aide de la donnée d'identification temporaire, une première authentification du module mémoire par l'intermédiaire de l'entité informatique et de la base de données centrale précédemment décrite.

Avantageusement, le procédé de gestion selon la présente invention comporte une étape de réception d'une nouvelle donnée d'identification déterminée et transmise par l'entité informatique suite à la première authentification.

Avantageusement, le procédé de gestion selon la présente invention comporte une étape de mémorisation de la nouvelle donnée d'identification dans le module mémoire.

En phase nominale, une fois le terminal activé sur le deuxième réseau, le procédé de gestion selon la présente invention comporte une deuxième étape de connexion du terminal au premier réseau via une passerelle d'interconnexion. Cette deuxième étape de connexion permet d'établir, à l'aide de la nouvelle donnée d'identification, une deuxième authentification du module mémoire par l'intermédiaire de l'entité informatique et de la base de données centrale.

Suite à la deuxième étape de connexion, le procédé de gestion selon la présente invention comporte avantageusement une étape de gestion qui consiste notamment à historiser et transmettre à une base de données locale la ou les informations relatives aux différents accès du terminal aux services du deuxième réseau. Il est ainsi possible d'avoir une facturation locale sur le deuxième

Corrélativement, l'invention porte également sur le programme d'ordinateur, selon la revendication 9, comportant des instructions adaptées pour l'exécution des étapes du procédé de gestion tel que décrit ci-dessus. Ce programme présente les mêmes caractéristiques que celles décrites précédemment pour le programme permettant la mise en oeuvre du procédé d'activation.

De la même façon, l'invention porte sur un support d'enregistrement lisible par un ordinateur sur lequel est enregistré un programme d'ordinateur comprenant des instructions pour l'exécution des étapes du procédé de gestion tel que décrit ci-dessus. Ce support présente les mêmes caractéristiques que celles décrites précédemment pour le support d'enregistrement pour le programme permettant la mise en oeuvre du procédé d'activation.

L'objet de la présente invention porte en outre sur un module mémoire, selon la revendication 10,
permettant l'activation et la gestion d'un terminal sur un deuxième réseau, ledit module mémoire étant associé dans une base de données centrale à un premier réseau prédéterminé.

Ledit module mémoire comporte avantageusement un moyen de mémorisation qui comprend, avant activation du terminal dans un deuxième réseau, une donnée d'identification temporaire.

Avantageusement, le module mémoire selon la présente invention comporte un module d'activation qui comprend un moyen d'activation ; ce moyen d'activation est configuré d'une part pour recevoir d'une entité informatique telle que décrite ci- sur le premier réseau une nouvelle donnée d'identification contenant une information d'identification relative au deuxième réseau, ceci suite à une activation du terminal dans le deuxième réseau.

Avantageusement, le moyen d'activation est configuré d'autre part pour mémoriser dans le moyen de mémorisation cette nouvelle donnée d'identification. Cette mémorisation se réalise notamment par le remplacement de la donnée d'identification temporaire par la nouvelle donnée d'identification déterminée par l'entité informatique en fonction de l'authentification.

Avantageusement, le module d'activation comporte un moyen de connexion configuré pour établir au moins une connexion du terminal au premier réseau via une passerelle d'interconnexion. De façon optionnelle, le moyen de connexion est également configuré pour transmettre à la base de données centrale une information relative au deuxième réseau dans lequel le terminal est activé.

Avantageusement, le module d'activation comporte un moyen de gestion configuré pour historiser et transmettre à une base de données locale la ou les informations relatives aux différents accès du terminal aux services du deuxième réseau.

Enfin, l'objet de la présente invention selon un autre aspect porte sur un terminal, selon la revendication 12, comportant un module mémoire tel que décrit ci-dessus pour permettre l'activation du terminal sur un deuxième réseau.

Ainsi, l'objet de la présente invention, par ses différents aspects fonctionnels et structurels, permet d'activer et de gérer aisément sur un deuxième réseau un terminal comprenant un module mémoire associé initialement à un premier réseau. Cette activation permet ensuite un accès et une gestion des services du deuxième réseau, l'utilisateur du terminal étant reconnu comme un abonné de ce deuxième réseau.

D'autres caractéristiques et avantages de la présente invention ressortiront de la description ci-dessous, en référence aux figures 1 à 4 annexées qui en illustrent un exemple de réalisation dépourvu de tout caractère limitatif et sur lesquelles :
- la figure 1 représente de façon schématique l'activation d'un terminal sur un deuxième réseau selon un exemple de réalisation avantageux de la présente invention ;
- la figure 2 représente de façon schématique l'utilisation d'un terminal sur un deuxième réseau après activation selon un exemple de réalisation avantageux de la présente invention ;
- la figure 3 représente de façon schématique un organigramme illustrant le procédé d'activation selon un exemple de réalisation avantageux de la présente invention ; et
- la figure 4 représente de façon schématique un organigramme illustrant le procédé de gestion selon un exemple de réalisation avantageux de la présente invention.

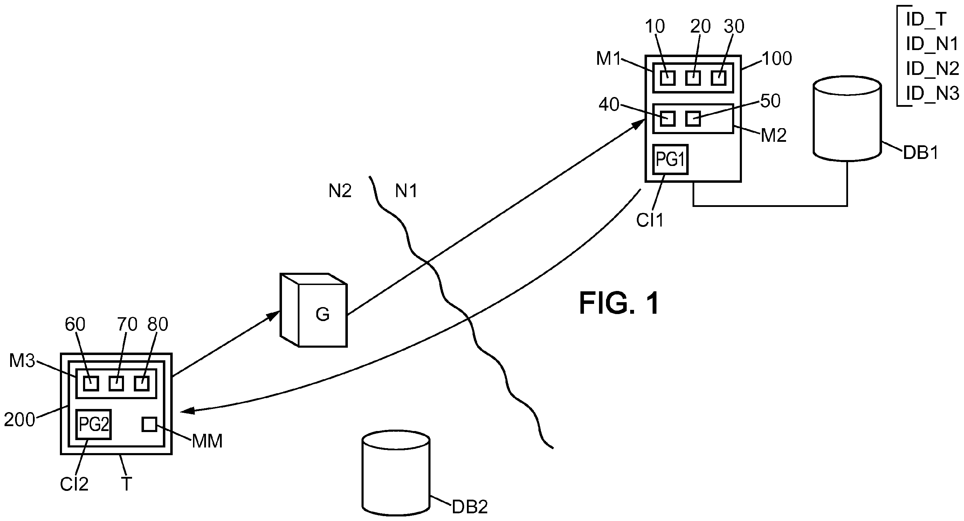

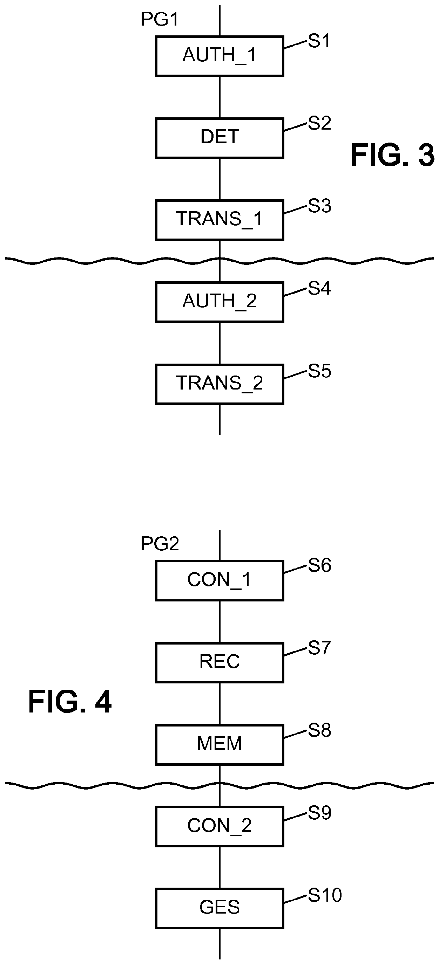

Une entité informatique, un module mémoire, un terminal, un procédé d'activation et un procédé de gestion, conformes à un exemple de réalisation avantageux de la présente invention, vont maintenant être décrits dans ce qui suit en faisant référence conjointement aux figures 1 à 4.

Pour rappel, permettre l'activation sur un deuxième réseau d'un terminal comprenant un module mémoire associé dans une base de données centrale à un premier réseau prédéterminé est un des objectifs de la présente invention.

A cet effet, dans l'exemple de réalisation décrit ici, et comme illustré en figure 1, le terminal T comporte un module mémoire 200 tel que par exemple une carte SIM (pour « Subscriber Identity Module »).

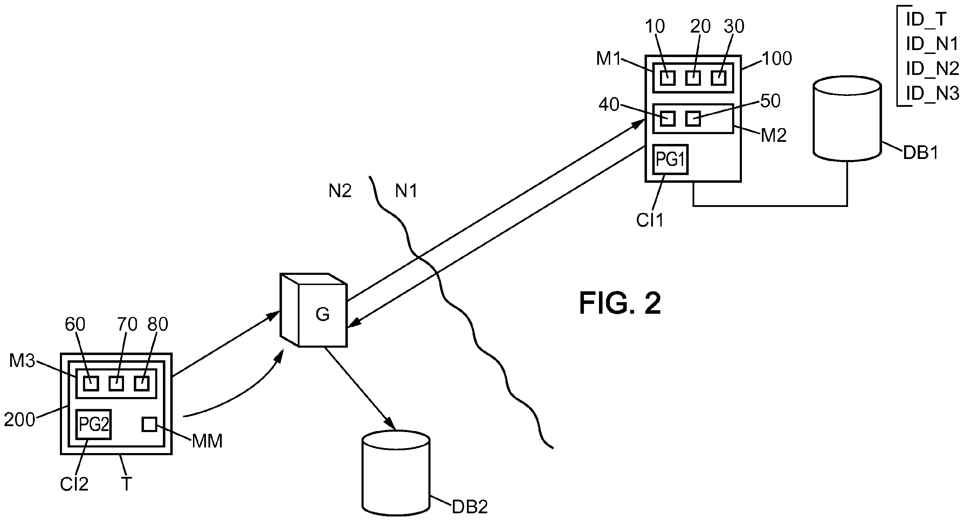

Dans l'exemple décrit ici, et illustré notamment en figures 1 et 2, ce module mémoire 200 est livré par le fabricant du terminal T avec en mémoire sur un moyen de mémoration MM une donnée d'identification temporaire ID_T. Bien évidemment, alternativement, il est tout à fait possible que le fabricant du terminal T livre le terminal à un fabricant de module mémoire 200 qui intègre lui-même le module sur le terminal, ou encore qu'un troisième intervenant, dit intégrateur, réceptionne le module mémoire 200 et le terminal T, et réalise l'intégration lui-même.

L'attribution initiale au moyen de mémoration MM du module mémoire 200 d'une donnée d'identification temporaire ID_T est caractéristique de la présente invention. Cette attribution d'une donnée temporaire permet notamment la fabrication d'un seul et même type de module mémoire pour une livraison dans plusieurs pays.

A titre d'exemple, et de façon non limitative, cette donnée d'identification peut être une donnée du type IMSI (pour « International Mobile Subscriber Identity »). Cette donnée comprend ainsi un numéro unique qui permet à un réseau du type par exemple GSM ou UMTS d'identifier l'abonné.

Selon la présente invention, le module mémoire 200 du terminal T est associé dans une base de données centrale DB 1 à un premier réseau prédéterminé N1.

Dans l'exemple de réalisation décrit ici, la base de données centrale DB1 est une base de données du type HLR (pour « Home Location Register »). Cette base de données DB1 comporte donc les informations relatives à tout abonné autorisé à utiliser le ou les réseaux qui sont prédéterminés.

Dans l'exemple décrit ici, le module mémoire 200 comporte un module d'activation M3 spécifique qui comprend un moyen de connexion 70 permettant d'établir une connexion du terminal T au premier réseau N1 via une passerelle d'interconnexion G, cette passerelle G pouvant être par exemple une passerelle GGSN (pour « Gateway GPRS Support Node »).

Dans l'exemple décrit ici, et tel qu'illustré en figure 1, en phase d'activation, le terminal T établit donc une première connexion S6 au premier réseau N1. Suite à cette première connexion S6, le premier moyen d'authentification 10 du premier module d'authentification M1 de l'entité informatique 100 authentifie, lors d'une première étape d'authentification S1, le module mémoire 200 grâce à la donnée d'identification temporaire ID_T.

Lors de cette première connexion, une information relative au deuxième réseau N2 dans lequel le terminal T est activé est transmise à l'entité informatique 100. Cette information est traitée par le moyen de détermination 20 qui, lors d'une étape de détermination S2, compare cette information avec les données d'identification ID_N1, ID_N2 et ID_N3 qui sont prédéterminées dans la base de données centrale DB1, chacune de ces données étant par exemple associée à un réseau prédéterminé par l'opérateur en fonction du pays ou de la zone géographique. Ceci nécessite donc que, dans cette base préétablie DB1, les données d'identification ID_N1, ID_N2 et ID_N3 soit préalablement rattachées aux différents réseaux dans lesquels le terminal T doit potentiellement pouvoir basculer vers une facturation locale du trafic.

En tout état de cause, cette détermination permet donc d'affecter au module mémoire 200, et plus précisément au moyen de mémorisation MM, une nouvelle donnée d'identification, par exemple ID_N2, pour que le module mémoire 200 soit reconnu comme activé sur le réseau, ici par exemple le deuxième réseau N2.

Cette détermination d'une nouvelle donnée d'identification est caractéristique de la présente invention : elle est déterminante pour permettre le passage d'un trafic en itinérance à un trafic local.

Une fois déterminée, cette donnée d'identification ID_N2 est transmise directement au module mémoire 200 par un premier moyen de transmission 30, ceci lors d'une première étape de transmission S3.

Le module d'activation M3 du terminal T reçoit lors d'une étape de réception S7 cette donnée ID_N2 et mémorise lors d'une étape de mémorisation S8 sur le moyen de mémorisation MM cette nouvelle donnée.

Le module 200 est ainsi prêt à être activé : l'utilisateur du terminal T va pouvoir être reconnu comme abonné aux services du deuxième réseau N2.

Ainsi, en phase nominale qui est illustrée ici en figure 2, l'utilisateur du terminal T se reconnecte au deuxième réseau N2 lors d'une deuxième connexion S9, éventuellement après avoir exécuté un redémarrage complet ou partiel de son terminal T (« reset » ou « reboot »).

Lors de cette deuxième connexion S9 au deuxième réseau N2, une nouvelle authentification auprès de la base de données centrale DB1 est enclenchée. Cette deuxième étape d'authentification S4 qui se fait via la passerelle de connexion G est réalisé par le deuxième module d'authentification M2 qui comprend un deuxième moyen d'authentification 40 adapté pour comparer la donnée d'identification ID_N2 avec la base de données centrale DB1.

Le résultat de cette comparaison est ensuite envoyé par un moyen de transmission 50 lors d'une deuxième étape de transmission S5 au réseau N2, ce dernier est capable de traiter ce résultat et de reconnaître que la donnée d'identification ID_N2 correspond bien à un élément appartenant à l'ensemble des identifiants pour le réseau auquel le GGSN est raccordé.

Comme évoqué précédemment, dans une variante de réalisation non-illustrée ici, les premier M1 et deuxième M2 moyens d'authentification peuvent être une seule et même entité.

Dans l'exemple décrit ici, le terminal T peut alors établir une communication sur le deuxième réseau N2, et la passerelle G n'envoie pas les comptes rendus d'appel vers le premier réseau original N1.

Ainisi, dans cet exemple, le terminal T comporte un moyen de gestion 80 qui permet une gestion S10 en historisant et en transmettant à une base de données locale DB2 l'ensemble des informations relatives aux différentes communications établies et services utilisées sur le deuxième réseau N2. Cette base de données DB2 est associée au deuxième réseau N2.

Ainsi, on note que dans la présente invention l'authentification du terminal sur le deuxième réseau permet de faire une facturation et une prise en charge locale, ceci même si cette authentification est rattachée matériellement à une entité informatique du premier réseau original.

La mise en place d'une telle technologie permet d'offrir aux abonnés une très large couverture de réseaux possibles avec des tarifications locales très avantageuses. Ceci permet également de développer les offres multi-opérateurs pour avoir un abonnement couvrant plusieurs pays à la fois.

De façon avantageuse, on relève que la partie authentification décrite ci-dessus n'est pas modifiée tout au long de la durée de vie du terminal T et du module mémoire 200.

Enfin, dans l'exemple décrit ici, et comme illustré en figures 1 et 2, on comprend que les différentes étapes du procédé d'activation et de gestion sont respectivement commandées et mises par un premier PG1 et un deuxième PG2 programmes d'ordinateur contenus sur un premier CI1 et un deuxième CI support d'enregistrement : le support CI1 étant intégré sur l'entité informatique 100 et le support CI2 étant intégré sur le module mémoire 200.

La présente invention permet à l'opérateur d'implémenter sur tous les équipements du réseau original un unique algorithme d'authentification : il existe donc très peu de modifications à apporter à l'architecture réseau existante pour mettre en place une telle technologie : implémentation d'un programme d'ordinateur intégrant un algorithme d'activation, d'authentification et de gestion sur les équipements actuels. Les fabricants de terminaux n'ont également que très peu de modifications à réaliser : attribution sur le module mémoire d'une unique donnée d'identification temporaire, et aucune modification sur le terminal.

Grâce à la présente invention, le premier réseau, dit réseau originel, ne supporte plus toute la charge du trafic, comme c'est le cas par exemple dans les situations de trafic en itinérance. En effet, la solution selon la présente invention permet une authentification et une activation en itinérance et le trafic et sa gestion deviennent locaux.

De la même façon, grâce à la présente invention, il n'est plus nécessaire de pré-charger d'algorithmes d'authentification après l'émission d'un module mémoire.

La présente invention permet ainsi aux industriels, fabricants de terminaux avec module mémoire intégré, de fournir à l'ensemble de leurs clients un seul et unique produit, ce produit intégrant un simple module mémoire incluant une donnée d'identification temporaire, qui devra ensuite être mise à jour lors de l'activation du terminal sur un des réseaux prédéterminés par le fabricant ou l'opérateur.

Il devra être observé que cette description détaillée porte sur un exemple de réalisation particulier de la présente invention, mais qu'en aucun cas cette description ne revêt un quelconque caractère limitatif à l'objet de l'invention ; bien au contraire, elle a pour objectif d'ôter toute éventuelle imprécision ou toute mauvaise interprétation des revendications qui suivent.

## Revendications

1. Procédé d'activation sur un deuxième réseau (N2) d'un terminal (T) comprenant un module mémoire (200) comportant une donnée d'identification temporaire (ID_T), le module mémoire étant livré avec ladite donnée d'identification temporaire par le fabricant du terminal, le fabricant du module mémoire ou un intégrateur du module mémoire et du terminal, ledit module mémoire étant associé dans une base de données centrale (DB1) à un premier réseau prédéterminé (N1), ladite base de données centrale (DB1) comportant des données d'identification (ID_N1, ID_N2, ID_N3) prédéterminées respectivement associées à l'un d'une pluralité de réseaux prédéterminés (N1, N2), ledit procédé d'activation (100) comportant :
- suite à une première connexion du terminal (T) depuis le deuxième réseau (N2) au premier réseau (N1) via une passerelle d'interconnexion (G), une première étape d'authentification (S1) du module mémoire (200) auprès de la base de données centrale (DB1) par l'intermédiaire de la donnée d'identification temporaire (ID_T),
- une étape de détermination (S2) consistant à déterminer une nouvelle donnée d'identification (ID_N1, ID_N2, ID_N3) en comparant une information relative au deuxième réseau (N2) auquel le terminal est connecté avec chacune des données d'identification (ID_N1, ID_N2, ID_N3) prédéterminées de la base de données centrale (DB1), cette information étant transmise à la base de données centrale (DB1) lors de ladite première connexion du terminal (T) au premier réseau (N1), et
- une première étape de transmission (S3) consistant à transmettre cette nouvelle donnée d'identification (ID_N1, ID_N2, ID_N3) au module mémoire (200) pour une mémorisation sur le module mémoire (200) de cette nouvelle donnée d'identification (ID_N1, ID_N2, ID_N3)

2. Procédé d'activation selon la revendication 1, **caractérisé en ce qu'**il comporte, suite à une deuxième connexion du terminal (T) au premier réseau (N1) via la passerelle d'interconnexion (G), une deuxième étape d'authentification (S4) du module mémoire (200) auprès de la base de données centrale (DB1) par l'intermédiaire de la donnée d'identification (ID_N1, ID_N2, ID_N3).

3. Programme d'ordinateur (PG1) comportant des instructions adaptées pour l'exécution des étapes du procédé d'activation selon l'une quelconque des revendications 1 ou 2 lorsque ledit programme d'ordinateur (PG1) est exécuté par un ordinateur.

4. Entité informatique (100) pour l'activation sur un deuxième réseau (N2) d'un terminal (T) comprenant un module mémoire (200) comportant une donnée d'identification temporaire (ID_T), le module mémoire étant livré avec ladite donnée d'identification temporaire par le fabricant du terminal, le fabricant du module mémoire ou un intégrateur du module mémoire et du terminal, ledit module mémoire étant associé dans une base de données centrale (DB1) à un premier réseau prédéterminé (N1), ladite base de données centrale (DB1) comportant des données d'identification (ID_N1, ID_N2, ID_N3) prédéterminées respectivement associées à l'un d'une pluralité de réseaux prédéterminés (N1, N2), ladite entité informatique (100) comportant :
- un premier module d'authentification (M1) comprenant :
a) un premier moyen d'authentification (10) configuré pour permettre l'authentification du module mémoire (200) auprès de la base de données centrale (DB1) par l'intermédiaire de la donnée d'identification temporaire (ID_T) suite à une première connexion du terminal (T) au premier réseau (N1) depuis le deuxième réseau via une passerelle d'interconnexion (G),
b) un moyen de détermination (20) configuré pour déterminer une nouvelle donnée d'identification (ID_N1, ID_N2, ID_N3) en comparant une information relative au deuxième réseau (N2) avec chacune des données d'identification (ID_N1, ID_N2, ID_N3) prédéterminées de la base de données centrale (DB1), cette information étant transmise à la base de données centrale (DB1) lors de ladite première connexion du terminal (T) au premier réseau (N1), et
c) un premier moyen de transmission (30) configuré pour transmettre cette nouvelle donnée d'identification (ID_N1, ID_N2, ID_N3) au module mémoire (200) pour une mémorisation sur le module mémoire (200) de cette nouvelle donnée d'identification (ID_N1, ID_N2, ID_N3).

5. Entité informatique (100) selon la revendication 4, **caractérisé en ce qu'**il comporte un deuxième module d'authentification (M2) comprenant un deuxième moyen d'authentification (40) configuré pour permettre l'authentification du module mémoire (200) auprès de la base de données centrale (DB1) par l'intermédiaire de la donnée d'identification (ID_N1, ID_N2, ID_N3) suite à une deuxième connexion du terminal (T) au premier réseau (N1) via la passerelle d'interconnexion (G).

6. Procédé de gestion sur un deuxième réseau (N2) d'un terminal (T) comprenant un module mémoire (200) associé dans une base de données centrale (DB1) à un premier réseau prédéterminé (N1), et comportant une donnée d'identification temporaire (ID_T), le module mémoire étant livré avec ladite donnée d'identification temporaire par le fabricant du terminal, le fabricant du module mémoire ou un intégrateur du module mémoire et du terminal, ladite base de données centrale (DB1) comportant des données d'identification (ID_N1, ID_N2, ID_N3) prédéterminées respectivement associées à l'un d'une pluralité de réseaux prédéterminés (N1, N2), ledit procédé de gestion comportant les étapes suivantes :
- une première étape de connexion (S6) du terminal (T) au premier réseau (N1) depuis le deuxième réseau via une passerelle d'interconnexion (G) pour établir, à l'aide de la donnée d'identification temporaire (ID_T), une première authentification du module mémoire (200) par l'intermédiaire d'une entité informatique (100) et de la base de données centrale (DB1),
- une étape de réception (S7) d'une nouvelle donnée d'identification (ID_N1, ID_N2, ID_N3) déterminée et transmise par l'entité informatique (100) suite à la première authentification, cette nouvelle donnée d'identification étant déterminée en comparant une information relative au deuxième réseau (N2) auquel le terminal est connecté avec chacune des données d'identification (ID_N1, ID_N2, ID_N3) prédéterminées de la base de données centrale (DB1), cette information étant transmise à la base de données centrale (DB1) lors de ladite première connexion du terminal (T) au premier réseau (N1), et
- une étape de mémorisation (S8) de la nouvelle donnée d'identification (ID_N1, ID_N2, ID_N3) dans le module mémoire (200).

7. Procédé de gestion selon la revendication 6, **caractérisé en ce qu'**il comporte une deuxième étape de connexion (S9) du terminal (T) au premier réseau (N1) via une passerelle d'interconnexion (G) pour établir, à l'aide de la nouvelle donnée d'identification (ID_N1, ID_N2, ID_N3), une deuxième authentification du module mémoire (200) par l'intermédiaire de l'entité informatique (100) et de la base de données centrale (DB1).

8. Procédé de gestion selon la revendication 7, **caractérisé en ce qu'**il comporte, suite à la deuxième étape de connexion (S9), une étape de gestion (S10) consistant notamment à historiser et transmettre à une base de données locale (DB2) la ou les informations relatives aux différents accès du terminal (T) aux services du deuxième réseau (N2).

9. Programme d'ordinateur (PG2) comportant des instructions adaptées pour l'exécution des étapes du procédé de gestion selon l'une quelconque des revendications 6 à 8, lorsque ledit programme d'ordinateur (PG2) est exécuté par un ordinateur.

10. Module mémoire (200) permettant l'activation et la gestion d'un terminal (T) sur un deuxième réseau (N2), ledit module mémoire (200) étant associé dans une base de données centrale (DB1) à un premier réseau prédéterminé (N1), et comportant un moyen de mémorisation (MM) comprenant avant activation du terminal (T) dans le deuxième réseau (N2) une donnée d'identification temporaire (ID_T), le module mémoire étant livré avec ladite donnée d'identification temporaire par le fabricant du terminal, le fabricant du module mémoire ou un intégrateur du module mémoire et du terminal, ledit module mémoire (200) comportant un module d'activation (M3) comprenant :
- un moyen de connexion (70) configuré pour établir depuis le deuxième réseau au moins une connexion du terminal (T) au premier réseau (N1) via une passerelle d'interconnexion (G) ; et
- un moyen d'activation (60) configuré :
a) pour transmettre à la base de données centrale (DB1) via la passerelle d'interconnexion (G) une information relative au deuxième réseau (N2) auquel le terminal est connecté,
b) pour recevoir d'une entité informatique (100) sur le premier réseau (N1) une nouvelle donnée d'identification (ID_N1, ID_N2, ID_N3) contenant une information d'identification relative au deuxième réseau (N2), et
c) pour mémoriser cette dite nouvelle donnée d'identification (ID_N1, ID_N2, ID_N3) dans le moyen de mémorisation (MM).

11. Module mémoire (200) selon la revendication 10, **caractérisé en ce que** le module d'activation (M3) comporte un moyen de gestion (80) configuré pour historiser et transmettre à une base de données locale (DB2) la ou les informations relatives aux différents accès du terminal (T) aux services du deuxième réseau (N2).

12. Terminal (T) comportant un module mémoire (200) selon l'une quelconque des revendications 10 ou 11 pour permettre l'activation du terminal (T) sur un deuxième réseau (N2).

## Patentansprüche

1. Verfahren zur Aktivierung, in einem zweiten Netz (N2), eines Endgerätes (T), welches ein Speichermodul (200) umfasst, das ein temporäres Identifikationsdatenelement (ID_T) aufweist, wobei das Speichermodul von dem Hersteller des Endgerätes, dem Hersteller des Speichermoduls oder einem Zusammenbauer des Speichermoduls und des Endgerätes mit dem temporären Identifikationsdatenelement geliefert wird, wobei das Speichermodul in einer zentralen Datenbank (DB1) einem vorbestimmten ersten Netz (N1) zugeordnet ist, wobei die zentrale Datenbank (DB1) vorbestimmte Identifikationsdatenelemente (ID_N1, ID_N2, ID_N3) enthält, die jeweils einem von mehreren vorbestimmten Netzen (N1, N2) zugeordnet sind, wobei das Verfahren zur Aktivierung (100) umfasst:
- im Anschluss an eine erste Verbindung des Endgerätes (T) vom zweiten Netz (N2) aus mit dem ersten Netz (N1) über ein Verbindungs-Gateway (G), einen ersten Schritt der Authentifizierung (S1) des Speichermoduls (200) bei der zentralen Datenbank (DB1) über das temporäre Identifikationsdatenelement (ID_T),
- einen Bestimmungsschritt (S2), der darin besteht, ein neues Identifikationsdatenelement (ID_N1, ID_N2, ID_N3) durch Vergleichen einer Information, die sich auf das zweite Netz (N2) bezieht, mit dem das Endgerät verbunden ist, mit jedem der vorbestimmten Identifikationsdatenelemente (ID_N1, ID_N2, ID_N3) der zentralen Datenbank (DB1) zu bestimmen, wobei diese Information bei der ersten Verbindung des Endgerätes (T) mit dem ersten Netz (N1) zu der zentralen Datenbank (DB1) übertragen wird, und
- einen ersten Übertragungsschritt (S3), der darin besteht, dieses neue Identifikationsdatenelement (ID_N1, ID_N2, ID_N3) zu dem Speichermodul (200) zu übertragen, zur Speicherung dieses neuen Identifikationsdatenelements (ID_N1, ID_N2, ID_N3) im Speichermodul (200).

2. Verfahren zur Aktivierung nach Anspruch 1, **dadurch gekennzeichnet, dass** es im Anschluss an eine zweite Verbindung des Endgerätes (T) mit dem ersten Netz (N1) über das Verbindungs-Gateway (G) einen zweiten Schritt der Authentifizierung (S4) des Speichermoduls (200) bei der zentralen Datenbank (DB1) über das Identifikationsdatenelement (ID_N1, ID_N2, ID_N3) umfasst.

3. Computerprogramm (PG1), welches Anweisungen umfasst, die dafür ausgelegt sind, die Schritte des Verfahrens zur Aktivierung nach einem der Ansprüche 1 oder 2 auszuführen, wenn das Computerprogramm (PG1) von einem Computer ausgeführt wird.

4. Datenverarbeitungsentität (100) zur Aktivierung, in einem zweiten Netz (N2), eines Endgerätes (T), welches ein Speichermodul (200) umfasst, das ein temporäres Identifikationsdatenelement (ID_T) aufweist, wobei das Speichermodul von dem Hersteller des Endgerätes, dem Hersteller des Speichermoduls oder einem Zusammenbauer des Speichermoduls und des Endgerätes mit dem temporären Identifikationsdatenelement geliefert wird, wobei das Speichermodul in einer zentralen Datenbank (DB1) einem vorbestimmten ersten Netz (N1) zugeordnet ist, wobei die zentrale Datenbank (DB1) vorbestimmte Identifikationsdatenelemente (ID_N1, ID_N2, ID_N3) enthält, die jeweils einem von mehreren vorbestimmten Netzen (N1, N2) zugeordnet sind, wobei die Datenverarbeitungsentität (100) aufweist:
- ein erstes Authentifizierungsmodul (M1), welches umfasst:
a) ein erstes Authentifizierungsmittel (10), das dafür eingerichtet ist, die Authentifizierung des Speichermoduls (200) bei der zentralen Datenbank (DB1) über das temporäre Identifikationsdatenelement (ID_T) im Anschluss an eine erste Verbindung des Endgerätes (T) mit dem ersten Netz (N1) vom zweiten Netz aus über ein Verbindungs-Gateway (G) zu ermöglichen,
b) ein Bestimmungsmittel (20), das dafür eingerichtet ist, ein neues Identifikationsdatenelement (ID_N1, ID_N2, ID_N3) durch Vergleichen einer Information, die sich auf das zweite Netz (N2) bezieht, mit jedem der vorbestimmten Identifikationsdatenelemente (ID_N1, ID_N2, ID_N3) der zentralen Datenbank (DB1) zu bestimmen, wobei diese Information bei der ersten Verbindung des Endgerätes (T) mit dem ersten Netz (N1) zu der zentralen Datenbank (DB1) übertragen wird, und
c) ein erstes Übertragungsmittel (30), das dafür eingerichtet ist, dieses neue Identifikationsdatenelement (ID_N1, ID_N2, ID_N3) zu dem Speichermodul (200) zu übertragen, zur Speicherung dieses neuen Identifikationsdatenelements (ID_N1, ID_N2, ID_N3) im Speichermodul (200).

5. Datenverarbeitungsentität (100) nach Anspruch 4, **dadurch gekennzeichnet, dass** sie ein zweites Authentifizierungsmodul (M2) aufweist, welches ein zweites Authentifizierungsmittel (40) umfasst, das dafür eingerichtet ist, die Authentifizierung des Speichermoduls (200) bei der zentralen Datenbank (DB1) über das Identifikationsdatenelement (ID_N1, ID_N2, ID_N3) im Anschluss an eine zweite Verbindung des Endgerätes (T) mit dem ersten Netz (N1) über das Verbindungs-Gateway (G) zu ermöglichen.

6. Verfahren zur Verwaltung, in einem zweiten Netz (N2), eines Endgerätes (T), welches ein Speichermodul (200) umfasst, das in einer zentralen Datenbank (DB1) einem vorbestimmten ersten Netz (N1) zugeordnet ist und ein temporäres Identifikationsdatenelement (ID_T) aufweist, wobei das Speichermodul von dem Hersteller des Endgerätes, dem Hersteller des Speichermoduls oder einem Zusammenbauer des Speichermoduls und des Endgerätes mit dem temporären Identifikationsdatenelement geliefert wird, wobei die zentrale Datenbank (DB1) vorbestimmte Identifikationsdatenelemente (ID_N1, ID_N2, ID_N3) enthält, die jeweils einem von mehreren vorbestimmten Netzen (N1, N2) zugeordnet sind, wobei das Verfahren zur Verwaltung die folgenden Schritte umfasst:
- einen ersten Schritt der Verbindung (S6) des Endgerätes (T) mit dem ersten Netz (N1) vom zweiten Netz aus über ein Verbindungs-Gateway (G), um mithilfe des temporären Identifikationsdatenelements (ID_T) eine erste Authentifizierung des Speichermoduls (200) über eine Datenverarbeitungsentität (100) und die zentrale Datenbank (DB1) vorzunehmen,
- einen Schritt des Empfangs (S7) eines neuen Identifikationsdatenelements (ID_N1, ID_N2, ID_N3), das von der Datenverarbeitungsentität (100) im Anschluss an die erste Authentifizierung bestimmt und übertragen wurde, wobei dieses neue Identifikationsdatenelement durch Vergleichen einer Information, die sich auf das zweite Netz (N2) bezieht, mit dem das Endgerät verbunden ist, mit jedem der vorbestimmten Identifikationsdatenelemente (ID_N1, ID_N2, ID_N3) der zentralen Datenbank (DB1) bestimmt wird, wobei diese Information bei der ersten Verbindung des Endgerätes (T) mit dem ersten Netz (N1) zu der zentralen Datenbank (DB1) übertragen wird, und
- einen Schritt der Speicherung (S8) des neuen Identifikationsdatenelements (ID_N1, ID_N2, ID_N3) im Speichermodul (200).

7. Verfahren zur Verwaltung nach Anspruch 6, **dadurch gekennzeichnet, dass** es einen zweiten Schritt der Verbindung (S9) des Endgerätes (T) mit dem ersten Netz (N1) über ein Verbindungs-Gateway (G) umfasst, um mithilfe des neuen Identifikationsdatenelements (ID_N1, ID_N2, ID_N3) eine zweite Authentifizierung des Speichermoduls (200) über die Datenverarbeitungsentität (100) und die zentrale Datenbank (DB1) vorzunehmen.

8. Verfahren zur Verwaltung nach Anspruch 7, **dadurch gekennzeichnet, dass** es im Anschluss an den zweiten Schritt der Verbindung (S9) einen Verwaltungsschritt (S10) umfasst, der insbesondere darin besteht, die Information oder die Informationen, die sich auf die verschiedenen Zugriffe des Endgerätes (T) auf die Dienste des zweiten Netzes (N2) beziehen, zu archivieren und zu einer lokalen Datenbank (DB2) zu übertragen.

9. Computerprogramm (PG2), welches Anweisungen umfasst, die dafür ausgelegt sind, die Schritte des Verfahrens zur Verwaltung nach einem der Ansprüche 6 bis 8 auszuführen, wenn das Computerprogramm (PG2) von einem Computer ausgeführt wird.

10. Speichermodul (200), welches die Aktivierung und die Verwaltung eines Endgerätes (T) in einem zweiten Netz (N2) ermöglicht, wobei das Speichermodul (200) in einer zentralen Datenbank (DB1) einem vorbestimmten ersten Netz (N1) zugeordnet ist und ein Speicherungsmittel (MM) aufweist, das vor Aktivierung des Endgerätes (T) in dem zweiten Netz (N2) ein temporäres Identifikationsdatenelement (ID_T) umfasst, wobei das Speichermodul von dem Hersteller des Endgerätes, dem Hersteller des Speichermoduls oder einem Zusammenbauer des Speichermoduls und des Endgerätes mit dem temporären Identifikationsdatenelement geliefert wird, wobei das Speichermodul (200) ein Aktivierungsmodul (M3) aufweist, welches umfasst:
- ein Verbindungsmittel (70), das dafür eingerichtet ist, von dem zweiten Netz aus wenigstens eine Verbindung des Endgerätes (T) mit dem ersten Netz (N1) über ein Verbindungs-Gateway (G) herzustellen; und
- ein Aktivierungsmittel (60), das dafür eingerichtet ist:
a) zu der zentralen Datenbank (DB1) über das Verbindungs-Gateway (G) eine Information zu übertragen, die sich auf das zweite Netz (N2) bezieht, mit dem das Endgerät verbunden ist;
b) von einer Datenverarbeitungsentität (100) im ersten Netz (N1) ein neues Identifikationsdatenelement (ID_N1, ID_N2, ID_N3) zu empfangen, das eine Identifikationsinformation enthält, die sich auf das zweite Netz (N2) bezieht, und
c) das besagte neue Identifikationsdatenelement (ID_N1, ID_N2, ID_N3) in dem Speicherungsmittel (MM) zu speichern.

11. Speichermodul (200) nach Anspruch 10, **dadurch gekennzeichnet, dass** das Aktivierungsmodul (M3) ein Verwaltungsmittel (80) aufweist, das dafür eingerichtet ist, die Information oder die Informationen, die sich auf die verschiedenen Zugriffe des Endgerätes (T) auf die Dienste des zweiten Netzes (N2) beziehen, zu archivieren und zu einer lokalen Datenbank (DB2) zu übertragen.

12. Endgerät (T), welches ein Speichermodul (200) nach einem der Ansprüche 10 oder 11 aufweist, um die Aktivierung des Endgerätes (T) in einem zweiten Netz (N2) zu ermöglichen.

## Claims

1. Method of activation on a second network (N2) of a terminal (T) comprising a memory module (200) comprising a temporary identification data item (ID_T), the memory module being delivered with the said temporary identification data item by the manufacturer of the terminal, the manufacturer of the memory module or an integrator of the memory module and of the terminal, the said memory module being associated in a central database (DB1) with a first predetermined network (N1), the said central database (DB1) comprising predetermined identification data (ID_N1, ID_N2, ID_N3) associated respectively with one of a plurality of predetermined networks (N1, N2), the said method of activation (100) comprising:
- subsequent to a first connection of the terminal (T) from the second network (N2) to the first network (N1) via an interconnection gateway (G), a first step of authentication (S1) of the memory module (200) with the central database (DB1) by way of the temporary identification data item (ID_T),
- a determination step (S2) consisting in determining a new identification data item (ID_N1, ID_N2, ID_N3) by comparing an information item relating to the second network (N2) to which the terminal is connected with each of the predetermined identification data (ID_N1, ID_N2, ID_N3) of the central database (DB1), this information item being transmitted to the central database (DB1) during the said first connection of the terminal (T) to the first network (N1), and
- a first transmission step (S3) consisting in transmitting this new identification data item (ID_N1, ID_N2, ID_N3) to the memory module (200) for a storage on the memory module (200) of this new identification data item (ID_N1, ID_N2, ID_N3).

2. Method of activation according to Claim 1, **characterized in that** it comprises, subsequent to a second connection of the terminal (T) to the first network (N1) via the interconnection gateway (G), a second step of authentication (S4) of the memory module (200) with the central database (DB1) by way of the identification data item (ID_N1, ID_N2, ID_N3).

3. Computer program (PG1) comprising instructions adapted for the execution of the steps of the method of activation according to either one of Claims 1 or 2 when the said computer program (PG1) is executed by a computer.

4. Computing entity (100) for the activation on a second network (N2) of a terminal (T) comprising a memory module (200) comprising a temporary identification data item (ID_T), the memory module being delivered with the said temporary identification data item by the manufacturer of the terminal, the manufacturer of the memory module or an integrator of the memory module and of the terminal, the said memory module being associated in a central database (DB1) with a first predetermined network (N1), the said central database (DB1) comprising predetermined identification data (ID_N1, ID_N2, ID_N3) associated respectively with one of a plurality of predetermined networks (N1, N2), the said computing entity (100) comprising:
- a first authentication module (M1) comprising:
a) a first authentication means (10) configured to allow the authentication of the memory module (200) with the central database (DB1) by way of the temporary identification data item (ID_T) subsequent to a first connection of the terminal (T) to the first network (N1) from the second network via an interconnection gateway (G),
b) a determination means (20) configured to determine a new identification data item (ID_N1, ID_N2, ID_N3) by comparing an information item relating to the second network (N2) with each of the predetermined identification data (ID_N1, ID_N2, ID_N3) of the central database (DB1), this information item being transmitted to the central database (DB1) during the said first connection of the terminal (T) to the first network (N1), and
c) a first transmission means (30) configured to transmit this new identification data item (ID_N1, ID_N2, ID_N3) to the memory module (200) for a storage on the memory module (200) of this new identification data item (ID_N1, ID_N2, ID_N3).

5. Computing entity (100) according to Claim 4, **characterized in that** it comprises a second authentication module (M2) comprising a second authentication means (40) configured to allow the authentication of the memory module (200) with the central database (DB1) by way of the identification data item (ID_N1, ID_N2, ID_N3) subsequent to a second connection of the terminal (T) to the first network (N1) via the interconnection gateway (G).

6. Method of management on a second network (N2) of a terminal (T) comprising a memory module (200) associated in a central database (DB1) with a first predetermined network (N1), and comprising a temporary identification data item (ID_T), the memory module being delivered with the said temporary identification data item by the manufacturer of the terminal, the manufacturer of the memory module or an integrator of the memory module and of the terminal, the said central database (DB1) comprising predetermined identification data (ID_N1, ID_N2, ID_N3) associated respectively with one of a plurality of predetermined networks (N1, N2), the said method of management comprising the following steps:
- a first step of connection (S6) of the terminal (T) to the first network (N1) from the second network via an interconnection gateway (G) so as to establish, with the aid of the temporary identification data item (ID_T), a first authentication of the memory module (200) by way of a computing entity (100) and of the central database (DB1),
- a step of reception (S7) of a new identification data item (ID_N1, ID_N2, ID_N3) determined and transmitted by the computing entity (100) subsequent to the first authentication, this new identification data item being determined by comparing an information item relating to the second network (N2) to which the terminal is connected with each of the predetermined identification data (ID_N1, ID_N2, ID_N3) of the central database (DB1), this information item being transmitted to the central database (DB1) during the said first connection of the terminal (T) to the first network (N1), and
- a step of storage (S8) of the new identification data item (ID_N1, ID_N2, ID_N3) in the memory module (200).

7. Method of management according to Claim 6, **characterized in that** it comprises a second step of connection (S9) of the terminal (T) to the first network (N1) via an interconnection gateway (G) so as to establish, with the aid of the new identification data item (ID_N1, ID_N2, ID_N3), a second authentication of the memory module (200) by way of the computing entity (100) and of the central database (DB1).

8. Method of management according to Claim 7, **characterized in that** it comprises, subsequent to the second step of connection (S9), a management step (S10) consisting in particular in logging and transmitting to a local database (DB2) the information item or items relating to the various accesses of the terminal (T) to the services of the second network (N2).

9. Computer program (PG2) comprising instructions adapted for the execution of the steps of the method of management according to any one of Claims 6 to 8, when the said computer program (PG2) is executed by a computer.

10. Memory module (200) allowing the activation and the management of a terminal (T) on a second network (N2), the said memory module (200) being associated in a central database (DB1) with a first predetermined network (N1), and comprising a storage means (MM) comprising before activation of the terminal (T) in the second network (N2) a temporary identification data item (ID_T), the memory module being delivered with the said temporary identification data item by the manufacturer of the terminal, the manufacturer of the memory module or an integrator of the memory module and of the terminal, the said memory module (200) comprising an activation module (M3) comprising:
- a connection means (70) configured to establish from the second network at least one connection of the terminal (T) to the first network (N1) via an interconnection gateway (G); and
- an activation means (60) configured:
a) to transmit to the central database (DB1) via the interconnection gateway (G) an information item relating to the second network (N2) to which the terminal is connected,
b) to receive from a computing entity (100) on the first network (N1) a new identification data item (ID_N1, ID_N2, ID_N3) containing an identification information item relating to the second network (N2), and
c) to store this said new identification data item (ID_N1, ID_N2, ID_N3) in the storage means (MM).

11. Memory module (200) according to Claim 10, **characterized in that** the activation module (M3) comprises a management means (80) configured to log and transmit to a local database (DB2) the information item or items relating to the various accesses of the terminal (T) to the services of the second network (N2).

12. Terminal (T) comprising a memory module (200) according to either one of Claims 10 or 11 for allowing the activation of the terminal (T) on a second network (N2).
